# EUROPÄISCHE PATENTSCHRIFT

(11) **EP 2 383 443 B1**
(45) Veröffentlichungstag und Bekanntmachung des Hinweises auf die Patenterteilung: **12.02.2014**
(21) Anmeldenummer: 11174890.1
(22) Anmeldetag: 06.07.2004
(51) Int. Cl.: F01M 1/10, F01M 11/00, F01M 13/04

(54) **Modul für eine Brennkraftmaschine**
Module for a combustion engine
Module pour moteur à combustion interne

(30) Priorität: 14.07.2003 DE 20310841 U
(43) Veröffentlichungstag der Anmeldung: 02.11.2011
(62) Teilanmeldung aus: 04015848.7
(73) Patentinhaber: Hengst GmbH & Co. KG, 48147 Münster (DE)
(72) Erfinder: Ardes, Wilhelm, 59387 Ascheberg (DE)
(74) Vertreter: Linnemann, Winfried

(56) Entgegenhaltungen:
- EP-A1- 0 898 060
- EP-A1- 1 211 390
- EP-A2- 0 926 322
- DE-A1- 19 757 759
- US-A- 3 223 197

## Beschreibung

Die vorliegende Erfindung betrifft ein Modul für eine Brennkraftmaschine, das als bauliche Einheit aus zumindest einem Ölfilter für das Schmieröl der Brennkraftmaschine und einem Ölkühler für die Kühlung des Schmieröls mittels Kühlwassers der Brennkraftmaschine ausgebildet ist und das als Ganzes mittels einer Flanschverbindung unter Herstellung von Strömungsverbindungen an die Brennkraftmaschine angeflanscht ist, wobei durch die Flanschverbindung ein Ölkanal für zu filterndes Öl von der Brennkraftmaschine zum Ölfilter, ein Ölkanal für gefiltertes Öl vom Ölfilter zur Brennkraftmaschine, ein erster Kühlwasserkanal von der Brennkraftmaschine zum Ölkühler und ein zweiter Kühlwasserkanal vom Ölkühler zur Brennkraftmaschine führt.

Module für Brennkraftmaschinen, in denen unterschiedliche Nebenaggregate oder Komponenten der Brennkraftmaschine funktional zusammengefasst und räumlich kompakt untergebracht sind, sind aus dem Stand der Technik bekannt.

Das Dokument EP 1 211 390 A1 zeigt ein Modul für eine Brennkraftmaschine mit den im Oberbegriff des Anspruchs 1 angegebenen Merkmalen. Das Modul ist an den Motorblock der Brennkraftmaschine unter Herstellung von Strömungsverbindungen angeflanscht und umfasst einen Ölfilter, einen Ölkühler, einen Kühlwasserthermostat und eine Wasserpumpe. Dabei laufen über die Flanschverbindung vier Kanäle, nämlich ein Kühlwasserkanal vom Motorblock zum Modul, ein Kühlwasserkanal vom Modul zum Motorblock, ein Ölkanal vom Motorblock zum Modul und ein Ölkanal vom Modul zum Motorblock. Weiterhin kann durch die Flanschverbindung auch noch ein Ölablasskanal verlaufen, der bei einem Filtereinsatzwechsel Öl aus dem Ölfilter in die Ölwanne der Brennkraftmaschine führt. In dem Dokument ist ein das Kühlwasser auf verschiedene Strömungswege des Kühlwasserkreislaufs leitendes Stellelement erwähnt, welches hier der Kühlwasserthermostat ist, der den Kühlwasserkreislauf zwischen einem kleinen, den Kühler umgehenden, und einem großen, durch den Kühler führenden, Kühlwasserkreislauf umschaltet. Im Modul ist ein Bypasskanal vorgesehen, der von der Kühlwasser vom Motorblock zum Wasserkühler führenden Leitung abzweigt und als kleiner Kühlkreislauf zum Kühlwasserthermostat führt. In seinen Funktionen ist dieses Modul also auf das Filtern und Kühlen des Schmieröls und auf das Regeln des Kühlwasser-Kühlerkreises beschränkt.

Das Dokument EP 0 926 322 A2 offenbart ebenfalls ein Modul, das an eine Brennkraftmaschine angeflanscht ist. Das Modul umfasst hier einen Ölfilter, einen Ölkühler und einen Thermostat. Durch den das Modul mit dem Motorblock verbindenden Flansch laufen hier nur zwei Ölkanäle. Alle Wasserkanäle zwischen dem Modul und dem Motorblock sind externe Kanäle, das heißt Schläuche oder Rohrleitungen. Auch dieses zweite Modul ist in seinen Funktionen auf das Filtern und Kühlen des Schmieröls und auf das Regeln des Kühlwasser-Kühlerkreises beschränkt, wobei nachteilig noch überwiegend externe Leitungen für die nötigen Strömungsverbindungen verwendet werden.

Die EP 0 898 060 B1 beschreibt ein weiteres Ölmodul für Brennkraftmaschinen. Bei diesem bekannten Modul ist vorgesehen, dass es als eine bauliche Einheit aus Ölfilter, Ölkühler und Entlüftungssystem mit Ölabscheider ausgebildet ist und dass das Modul als Ganzes an die Brennkraftmaschine angeflanscht ist. Das Kurbelgehäuseentlüftungsgas gelangt über einen in die Flanschverbindung integrierten Übertrittsquerschnitt aus dem Kurbelgehäuse in den Ölabscheider, wo das im Kurbelgehäuseentlüftungsgas enthaltene Öl vom Gas abgetrennt wird. Das abgetrennte Öl wird über einen eigenen Ölrücklaufkanal in die Ölwanne zurückgeführt. Es wird hier also jeweils ein eigener Gaskanal und Ölrücklaufkanal benötigt.

Von Ölfiltern für Brennkraftmaschinen ist es an sich bekannt, diese mit einer automatischen Entleerung bei einem Filtereinsatzwechsel auszustatten. Eine solche automatische Entleerung ist bei dem Ölfilter des Moduls gemäß EP 0 898 060 B1 nachteilig nicht vorgesehen.

Weiterhin wird bei dem aus EP 0 898 060 B1 bekannten Modul durch die Flanschverbindung Kühlwasser von der Brennkraftmaschine zum Ölkühler geführt und nach Durchströmen des Ölkühlers wieder zur Brennkraftmaschine geleitet. Außer der Funktion des Kühlens des Öls hat das Modul im Hinblick auf das Kühlwasser hier keine Funktionen.

Für die vorliegende Erfindung stellt sich die Aufgabe, ein Modul der eingangs genannten Art zu schaffen, das die aufgeführten Nachteile vermeidet und bei dem einerseits eine möglichst große Zahl von Funktionen mit einer möglichst kleinen Zahl von in der Flanschverbindung zu verbindenden Kanälen erfüllt wird und bei dem andererseits zusätzliche Funktionen zur Verfügung gestellt werden, so dass ein noch höherer Integrationsgrad erreicht wird.

Die Lösung der gestellten Aufgabe gelingt erfindungsgemäß mit einem Modul der eingangs genannten Art, das dadurch gekennzeichnet ist,
- dass durch die Flanschverbindung zwei weitere, mit dem Stellelement in Strömungsverbindung stehende Kühlwasserkanäle verlaufen,
- dass das Modul mindestens ein das Kühlwasser auf verschiedene Strömungswege des Kühlwasserkreislaufs leitendes Stellelement umfasst,
- dass im Modul wenigstens ein weiterer Kühlwasserkanal vorgesehen ist, der mit wenigstens einem der Kühlwasserkanäle verbunden ist und Kühlwasser zum Stellelement hin oder vom Stellelement weg führt, und
- dass das Stellelement einen verstellbaren Strömungsteiler umfasst, der das Kühlwasser auf der Seite der Brennkraftmaschine abhängig vom jeweiligen Kühlbedarf von deren Zylinderkopf und von deren Kurbelgehäuse auf einen überwiegend den Zylinderkopf kühlenden Kühlwasserströmungsweg und einen überwiegend das Kurbelgehäuse kühlenden Kühlwasserströmungsweg aufteilt.

Bei dieser Lösung werden, ausgehend von einem zumindest einen Ölfilter und einen Ölkühler umfassenden Modul, zusätzliche Funktionen in das Modul integriert, die die Führung des Kühlwassers betreffen. Für die Kühlung des Öls im Ölkühler innerhalb des Moduls wird ohnehin Kühlwasser von der Brennkraftmaschine zum Ölkühler geführt und nach der Kühlung des Öls das Kühlwasser wieder zur Brennkraftmaschine zurückgeführt, so dass also das Modul in jedem Falle von Kühlwasser durchströmt ist. Bei dem erfindungsgemäßen Modul ist die zusätzlich integrierte Funktion durch wenigstens ein Stellelement realisiert, welches die Strömung des Kühlwassers im Kühlwasserkreislauf je nach Betriebszustand der Brennkraftmaschine beeinflusst, indem es das Kühlwasser auf verschiedene Strömungswege leitet oder in unterschiedlichem, veränderlichem Verhältnis auf verschiedene Strömungswege aufteilt. Dazu umfasst das Stellelement einen verstellbaren Strömungsteiler, der das Kühlwasser auf der Seite der Brennkraftmaschine abhängig vom jeweiligen Kühlbedarf von deren Zylinderkopf und von deren Kurbelgehäuse auf einen überwiegend den Zylinderkopf kühlenden Kühlwasserströmungsweg und einen überwiegend das Kurbelgehäuse kühlenden Kühlwasserströmungsweg aufteilt. Damit bildet das Modul einen Teil eines sogenannten "Split-Cooling"-Systems. Dafür wird der zusätzliche Aufwand für das Modul im Bereich seiner Wasserführung nur geringfügig erhöht, wobei aber gleichzeitig ein erheblicher Funktionsgewinn erzielt wird. Um aufwendig extern an das Modul angeschlossene Leitungen zu vermeiden, ist dabei vorgesehen, dass durch die Flanschverbindung zwei weitere, mit dem Stellelement in Strömungsverbindung stehende Kühlwasserkanäle verlaufen.

In weiterer Ausgestaltung des erfindungsgemäßen Moduls ist vorgesehen, dass das Stellelement oder ein weiteres das Kühlwasser auf verschiedene Strömungswege des Kühlwasserkreislaufs leitendes Stellelement ein Thermostatventil umfasst, das das Kühlwasser abhängig von seiner Temperatur in einen kleinen Kühlkreislauf unter Umgehung eines das Kühlwasser kühlenden Kühlers oder in einen großen Kühlkreislauf unter Durchströmung des das Kühlwasser kühlenden Kühlers leitet.

Eine weitere Funktion des Moduls kann dadurch erreicht werden, dass an dem Modul wenigstens ein Wasseranschluss für eine mit erwärmtem Kühlwasser betreibbare Heizung, insbesondere eine Kraftfahrzeuginnenraumheizung, vorgesehen ist. Durch den Anschluss der Heizung an das Modul kann in vielen Fällen eine Verkürzung von Strömungswegen und dafür erforderlichen Leitungen sowie eine vereinfachte Montag erreicht werden, da häufig das Modul leichter zugänglich ist als z.B. der Motorblock der Brennkraftmaschine.

Eine weitere Maßnahme, die die Zahl der Kanäle in der Flanschverbindung niedrig hält, besteht darin, dass in dem Modul zur Entleerung des Ölfilters bei einem Filtereinsatzwechsel ein Entleerungskanal des Ölfilters und zur Entleerung des Ölkühlers bei einem Ölwechsel ein Ölablasskanal des Ölkühlers vorgesehen sind und dass die beiden Kanäle innerhalb des Moduls zu einem gemeinsamen Ölkanal zusammenlaufen, der durch die Flanschverbindung hindurch zu einer Ölwanne der Brennkraftmaschine führt.

Für das Modul gemäß Erfindung ist bevorzugt vorgesehen, dass die die Flanschverbindung durchlaufenden Kanäle gegeneinander und gegen die Umgebung durch axial dichtende Dichtmittel abgedichtet sind. Mit axial dichtenden Dichtmitteln können die Flansche der Flanschverbindung auf der Seite des Moduls und auf der Seite der Brennkraftmaschine relativ einfach gehalten werden, was zu niedrigen Herstellungskosten auf beiden Seiten beiträgt.

In weiterer Ausgestaltung sind dabei bevorzugt die Dichtmittel der Flanschverbindung an dem modulseitigem Flansch angebracht. Da das Modul im Verhältnis zur übrigen Brennkraftmaschine ein vergleichsweise kleines und leichtes Bauteil ist, unterliegen die Dichtmittel nach ihrer Vorab-Anbringung am Modul einer geringeren Beschädigungsgefahr als dies bei einer Vorab-Anbringung der Dichtmittel an der Brennkraftmaschine der Fall wäre, bis die Flanschverbindung hergestellt ist.

Zur weiteren Vereinfachung der Herstellung der Flanschverbindung schlägt die Erfindung vor, dass die Dichtmittel durch eine einzige, einstückige Profildichtung gebildet sind. Hiermit werden Fehlerquellen bei der Montage vermieden, die entstehen würden, wenn mehrere kleinere Dichtungen im Bereich der Flanschverbindung anzubringen wären.

Damit das oder die Dichtmittel am Modul nicht unbeabsichtigt verloren gehen oder ihre Soll-Position unbeabsichtigt verlassen und somit Undichtigkeiten verursachen, ist gemäß Erfindung vorgesehen, dass das oder die Dichtmittel in eine oder mehrere Aufnahmennuten im modulseitigen Flansch eingesetzt oder eingeklemmt oder eingeklebt oder einvulkanisiert ist/sind.

Gemäß einer alternativen Ausführung ist vorgesehen, dass die Flanschverbindung beidseitig ebenflächig ausgeführt ist und dass das Dichtmittel eine einstückige Flachdichtung ist.

Schließlich besteht erfindungsgemäß die technische Möglichkeit, dass eine Kurbelgehäuseentlüftung und eine dafür vorgesehene Ölabscheidung und Druckregelung in das Modul einbezogen sind, wobei für die Kurbelgehäuseentlüftung der Ölkanal genutzt wird. Dabei benötigt die Flanschverbindung für dieses Modul trotz der um die Kurbelgehäuseentlüftung ergänzten Funktion keine zusätzlichen Kanäle, was in Anbetracht der Vielzahl der Funktionen die Anzahl der benötigten Kanäle vorteilhaft niedrig hält.

Mit allen Ausführungen des erfindungsgemäßen Moduls werden verschiedene Vorteile einzeln oder kombiniert erreicht. Insbesondere wird eine Minimierung der Zahl der Kanäle in der Flanschverbindung erzielt, was zu einer entsprechenden Reduzierung von Dichtstellen und Leckagegefahren sowie zu Kosteneinsparungen führt. Zugleich wird durch die besonders kompakte Bauweise Gewicht eingespart und zusätzlicher Raum gewonnen, der für die Unterbringung oder Anbringung weiterer Komponenten der Brennkraftmaschine genutzt werden kann. So können z.B. eine Lichtmaschine oder ein Klimaanlagenkompressor über mit Verstärkungsrippen versehene, am Modul angeformte Halterungen als Anbauteil mit dem Modul verbunden werden. Generell wird mit dem erfindungsgemäßen Modul eine größere Gestaltungsfreiheit in immer enger werdenden Motorräumen von modernen Kraftfahrzeugen erreicht.

Im Folgenden wird ein Ausführungsbeispiel des erfindungsgemäßen Moduls anhand einer Zeichnung erläutert. Die Figuren der Zeichnung zeigen:
- Figur 1: ein Modul zusammen mit einer Brennkraftmaschine, in schematischer Darstellung, und
- Figur 2: das Modul aus Figur 1 in Ansicht auf seinen Verbindungsflansch.

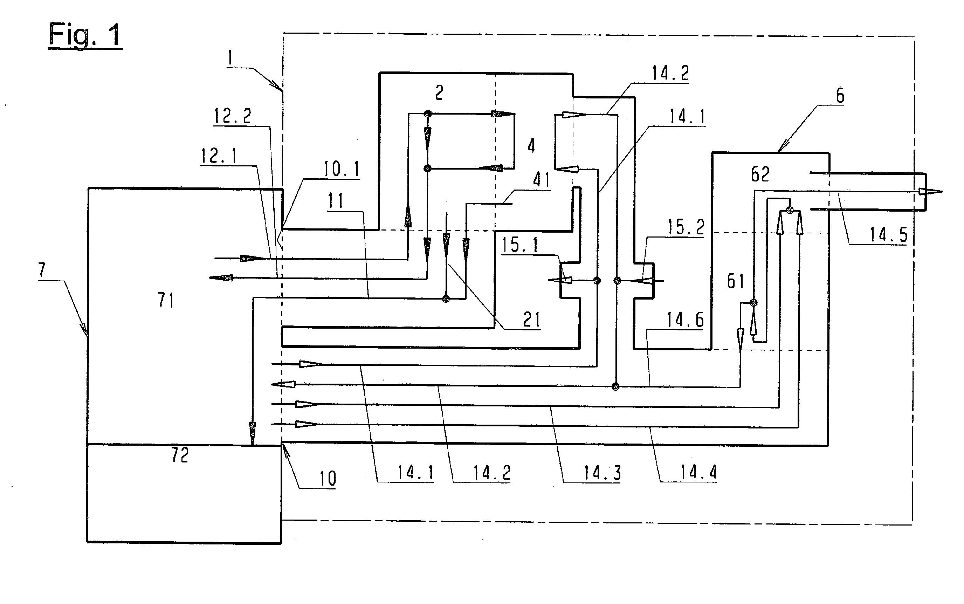

Figur 1 der Zeichnung zeigt in schematischer Darstellung ein Modul 1, welches neben einem Ölfilter 2 und einem Ölkühler 4 eine die Kühlwasserströmung beeinflussende Stellelement-Komponente 6 umfasst. Mittels einer Flanschverbindung 10 ist das Modul 1 mit einer zugehörigen Brennkraftmaschine 7 verbunden.

Der Ölfilter 2 erhält von der Brennkraftmaschine 7 über einen Rohölkanal 12.1 zu filterndes Öl. Das im Ölfilter 2 gefilterte Öl gelangt über einen Reinölkanal 12.2 zurück zur Brennkraftmaschine 7. Je nach Temperatur des zum Ölfilter 2 strömenden Öls wird ein mehr oder weniger großer Anteil davon durch den Ölkühler 4 geleitet und darin mittels Kühlwassers gekühlt. Der Ölkühler 4 ist hier dem Ölfilter 2 zugeordnet, so dass der Ölkühler 43 für seine Ölzuführung und -abführung über die beiden Ölkanäle 12.1 und 12.2 hinaus keine zusätzlichen Kanäle im Bereich der Flanschverbindung 10 benötigt.

Zur Entleerung des Ölfilters 2 bei einem Filtereinsatzwechsel dient ein Entleerungskanal 21 des Ölfilters 2 und zur Entleerung des Ölkühlers 4 bei einem Ölwechsel dient ein Ölablasskanal 41 des Ölkühlers 4. Die beiden Kanäle 21, 42 laufen innerhalb des Moduls 1 zu einem gemeinsamen Ölkanal 11 zusammen, der durch die Flanschverbindung 10 hindurch zu einer Ölwanne 72 der Brennkraftmaschine 7 führt.

Das für die Kühlung des Schmieröls im Ölkühler 4 benötigte Kühlwasser gelangt von der Brennkraftmaschine 7 über einen ersten Kühlwasserkanal 14.1 zum Ölkühler 4; das aus dem Ölkühler 4 austretende Kühlwasser strömt über den zweiten Kühlwasserkanal 14.2 zurück zur Brennkraftmaschine 7, jeweils durch die Flanschverbindung 10 hindurch.

Weiterhin zweigt bei dem Modul 1 gemäß Figur 1 vom ersten Kühlwasserkanal 14.1 in dessen Verlauf zwischen der Flanschverbindung 10 und dem Ölkühler 4 ein Heizwasseranschluss 15.1 ab, der mit dem Vorlauf einer Heizung, insbesondere einer Innenraumheizung eines die Brennkraftmaschine 7 aufweisenden Kraftfahrzeuges, verbindbar ist. Das Heizwasser kann dann von der Heizung kommend über den zweiten Heizwasseranschluss 15.2 zwischen dem Ölkühler 4 und der Flanschverbindung 10 in den zweiten Kühlwasserkanal 14.2 zurückgeleitet werden.

Ein bei dem Modul 1 gemäß Figur 1 weiterhin vorgesehenes Stellelement 6 umfasst bei dem dargestellten Beispiel zwei Komponenten, nämlich ein Thermostatventil 61 und einen verstellbaren Strömungsteiler 62.

Das Thermostatventil 61 dient dazu, von der Brennkraftmaschine 7 kommendes Kühlwasserje nach dessen Temperatur entweder durch einen kleinen Kühlkreislauf unter Umgehung eines das Kühlwasser kühlenden, in der Zeichnung nicht dargestellten Kühlers unmittelbar zur Brennkraftmaschine 7 zurückzuführen oder in einen großen Kühlkreislauf unter Durchströmung des das Kühlwasser kühlenden Kühlers zu leiten. Für die Rückleitung des Kühlwassers im kleinen Kühlkreislauf ist innerhalb des Moduls 1 zwischen dem Thermostatventil 61 und dem zweiten Kühlwasserkanal 14.2 ein interner Kühlwasserkanal 14.6 vorgesehen, der innerhalb des Moduls 1 in den zweiten Kühlwasserkanal 14.2 mündet, welcher seinerseits das Kühlwasser zur Brennkraftmaschine 7 führt.

Das von der Brennkraftmaschine 7 kommende Kühlwasser, das die Brennkraftmaschine 7 zur Kühlung durchströmt hat, strömt über zwei Kühlwasserkanäle 14.3 und 14.4 von der Brennkraftmaschine 7 durch die Flanschverbindung 10 hindurch zum Stellelement 6 und in diesem zu einem verstellbaren Strömungsteiler 62. Dabei führt der Kühlwasserkanal 14.3 Kühlwasser, das zur Kühlung eines in der Zeichnung nicht dargestellten Zylinderkopfes der Brennkraftmaschine 7 verwendet wurde, während der Kühlwasserkanal 14.4 Kühlwasser führt, das zur Kühlung des Kurbelgehäuses der Brennkraftmaschine 7 verwendet wurde. Je nach Anfall von abzuführender Wärmeenergie im Bereich des Zylinderkopfes und im Bereich des Kurbelgehäuses 71 der Brennkraftmaschine 7 stellt der verstellbare Strömungsteiler 62 die Strömung in den beiden Kühlwasserkanälen 14.3 und 14.4 bedarfsgerecht unterschiedlich ein. Diese Art von geteilter Kühlung ist an sich als "Split-Cooling"-Kühlsystem bekannt.

In Strömungsrichtung hinter dem verstellbaren Strömungsteiler 62 werden die beiden von der Brennkraftmaschine 7 durch die Kanäle 14.3 und 14.4 kommenden Kühlwasserströme im Modul 1 zusammengeführt und gemeinsam zum Eingang des schon erwähnten Thermostatventils 61 geleitet

Bei hoher Kühlwassertemperatur leitet das Thermostatventil 61 das Kühlwasser in den großen Kühlkreislauf und durch den Kühler für das Kühlwasser, wie oben erwähnt, wobei hierzu im Modul 1 ein weiterer Kühlwasserkanal 14.5 vorgesehen ist, der zu einem außerhalb der Flanschverbindung 10 liegenden Anschluss des Moduls 1 führt. An das Anschlussende dieses Kühlwasserkanals 14.5 ist eine zum Kühler für das Kühlwasser führende Kühlwasserleitung anschließbar.

Eine Kurbelgehäuseentlüftung und eine dafür vorgesehene Ölabscheidung und Druckregelung sind in das Modul 1 gemäß Figur 1 nicht integriert, es ist aber durchaus möglich, auch diese Funktionen noch in das Modul 1 gemäß Figur 1 einzubeziehen. Weitere Kanäle im Bereich der Flanschverbindung 10 würden dafür nicht benötigt, da für die Kurbelgehäuseentlüftung der Ölkanal 11 genutzt werden kann, der bei dem Modul 1 gemäß Figur 1 ohnehin schon vorhanden ist. Damit benötigt die Flanschverbindung 10 für das Modul 1 gemäß Figur 1 auch für die um die Kurbelgehäuseentlüftung ergänzte Ausführung nur sieben Kanäle, was in Anbetracht der Vielzahl der Funktionen eine niedrige Anzahl ist.

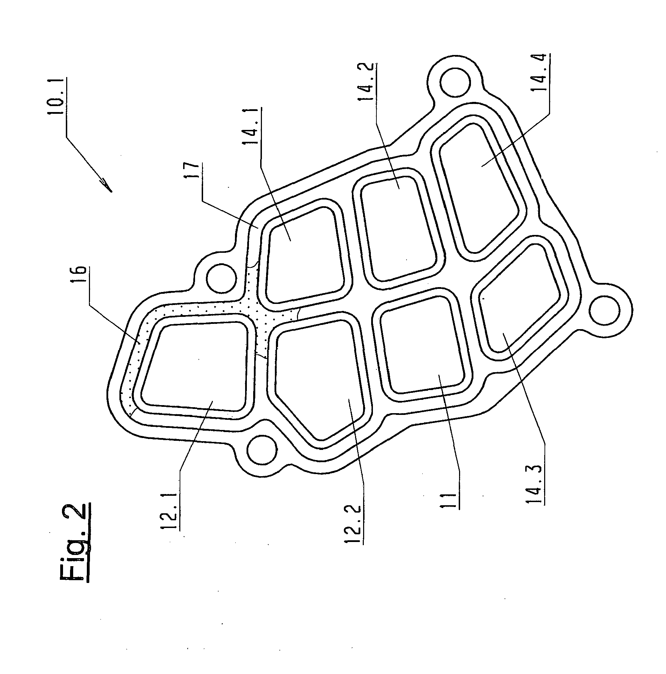

Figur 2 zeigt in Ansicht den modulseitigen Verbindungsflansch 10.1 des Moduls 1 gemäß Figur 1. Wie zuvor erwähnt, benötigt die Flanschverbindung 10 mit dem in Figur 2 gezeigten Flansch 10.1 insgesamt sieben Kanäle. Ganz oben in Figur 2 liegt der Rohölkanal 12.1, der das von der Brennkraftmaschine kommende, zu filternde und bedarfsweise zu kühlende Schmieröl zum Ölfilter 2 und zum Ölkühler 4 leitet. Darunter liegt der Reinölkanal 12.2, der das gefilterte und bedarfsweise gekühlte Schmieröl zur Brennkraftmaschine 7 zurückführt. Rechts neben dem Reinölkanal 12.2 liegt ein erster Kühlwasserkanal 14.1, der von der Brennkraftmaschine kommendes Kühlwasser zum Ölkühler 4 führt. Unter dem Kanal 14.1 liegt der zweite Kühlwasserkanal 14.2. Dieser Kanal 14.2 dient zur Rückführung aller Kühlwasserströme aus dem Modul 1 zur Brennkraftmaschine 7.

Ganz unten liegen im modulseitigem Flansch 10.1 zwei weitere Kühlwasserkanäle 14.3 und 14.4, die Kühlwasser aus verschiedenen Bereichen der Brennkraftmaschine 7 zum Modul 1 führen. Der Kühlwasserkanal 14.3 führt dabei Kühlwasser, das vom Zylinderkopf der Brennkraftmaschine 7 kommt, während der Kanal 14.4 Kühlwasser führt, das aus dem Bereich des Kurbelgehäuses der Brennkraftmaschine 7 stammt. Damit bilden die beiden Kühlwasserkanäle 14.3, 14.4 Teile des sogenannten "Split-Cooling"-Kühlsystems. Dieses Kühlsystem erlaubt eine gezielte und insbesondere unterschiedliche, bedarfsabhängige Kühlung einerseits des Bereichs des Zylinderkopfes und andererseits des Bereichs des Kurbelgehäuses 71 der Brennkraftmaschine 7.

Schließlich liegt im modulseitigen Flansch 10.1 gemäß Figur 2 noch der Kanal 11, der hier nur zur Rückführung von Schmieröl aus dem Ölfilter 2 bei einem Filtereinsatzwechsel und aus dem Ölkühler 4 bei einem Ölwechsel zur Brennkraftmaschine 7 dient. Zusätzlich kann er bei entsprechender Ausführung des Moduls 1 für die Kurbelgehäuseentlüftung genutzt werden.

Zur Abdichtung der Flanschverbindung 10 und der einzelnen Kanäle gegeneinander sowie zur Umgebung dient hier eine einstückige Profildichtung 16, die jeweils in eine passend ausgeformte, vorzugsweise angegossene, Nut 17 eingelegt ist. Alternativ kann die Flanschfläche auch absolut eben gestaltet sein und mit einer Flachdichtung mit passenden Durchbrechungen gegen die Brennkraftmaschine 7 abgedichtet sein.

## Patentansprüche

1. Modul (1) für eine Brennkraftmaschine (7), das als bauliche Einheit aus zumindest einem Ölfilter (2) für das Schmieröl der Brennkraftmaschine (7) und einem Ölkühler (4) für die Kühlung des Schmieröls mittels Kühlwassers der Brennkraftmaschine (7) ausgebildet ist und das als Ganzes mittels einer Flanschverbindung (10) unter Herstellung von Strömungsverbindungen an die Brennkraftmaschine (7) angeflanscht ist, wobei durch die Flanschverbindung (10) ein Ölkanal (12.1) für zu filterndes Öl von der Brennkraftmaschine (7) zum Ölfilter (2), ein Ölkanal (12.2) für gefiltertes Öl vom Ölfilter (2) zur Brennkraftmaschine (7), ein Ölkanal (11) für bei einem Filtereinsatzwechsel vom Ölfilter (2) zu der Brennkraftmaschine (7) rückzuführendes Öl, ein erster Kühlwasserkanal (14.1) von der Brennkraftmaschine (7) zum Ölkühler (4) und ein zweiter Kühlwasserkanal (14.2) vom Ölkühler (4) zur Brennkraftmaschine (7) führt,
**dadurch gekennzeichnet,**
- **dass** das Modul (1) mindestens ein das Kühlwasser auf verschiedene Strömungswege des Kühlwasserkreislaufs leitendes Stellelement (6) umfasst,
- **dass** im Modul (1) wenigstens ein weiterer Kühlwasserkanal (14.6) vorgesehen ist, der mit wenigstens einem der-Kühlwasserkanäle (14.1, 14.2) verbunden ist und Kühlwasser zum Stellelement (6) hin oder vom Stellelement (6) weg führt,
- dass durch die Flanschverbindung (10) zwei weitere, mit dem Stellelement (6) in Strömungsverbindung stehende Kühlwasserkanäle (14.3, 14.4) verlaufen,
- dass das Stellelement (6) einen verstellbaren Strömungsteiler (62) umfasst, der das Kühlwasser auf der Seite der Brennkraftmaschine (7) abhängig vom jeweiligen Kühlbedarf von deren Zylinderkopf und von deren Kurbelgehäuse (71) auf einen überwiegend den Zylinderkopf kühlenden Kühlwasserströmungsweg und einen überwiegend das Kurbelgehäuse (71) kühlenden Kühlwasserströmungsweg aufteilt und
- **dass** der Ölkanal (11) zugleich zur Rückführung von Öl aus dem Ölkühler (4) zur Brennkraftmaschine (7) bei einem Ölwechsel dient.

2. Modul nach Anspruch 1, **dadurch gekennzeichnet, dass** das Stellelement (6) ein Thermostatventil (61) umfasst, das das Kühlwasser abhängig von seiner Temperatur in einen kleinen Kühlkreislauf unter Umgehung eines das Kühlwasser kühlenden Kühlers oder in einen großen Kühlkreislauf unter Durchströmung des das Kühlwasser kühlenden Kühlers leitet.

3. Modul nach Anspruch 1 oder 2, **dadurch gekennzeichnet, dass** an dem Modul (1) wenigstens ein Wasseranschluss (15.1, 15.2) für eine mit erwärmtem Kühlwasser betreibbare Heizung, insbesondere eine Kraftfahrzeuginnenraumheizung, vorgesehen ist.

4. Modul nach einem der Ansprüche 1 bis 3, **dadurch gekennzeichnet, dass** in dem Modul (1) zur Entleerung des Ölfilters (2) bei einem Filtereinsatzwechsel ein Entleerungskanal (21) des Ölfilters (2) und zur Entleerung des Ölkühlers (4) bei einem Ölwechsel ein Ölablasskanal (41) des Ölkühlers (4) vorgesehen sind und dass die beiden Kanäle (21 und 42) innerhalb des Moduls (1) zu dem gemeinsamen Ölkanal (11) zusammenlaufen, der durch die Flanschverbindung (10) hindurch zu einer Ölwanne (72) der Brennkraftmaschine (7) führt.

5. Modul nach einem der vorhergehenden Ansprüche, **dadurch gekennzeichnet, dass** die die Flanschverbindung (10) durchlaufenden Kanäle (11, 12.1, 12.2, 14.1 - 14.4) gegeneinander und gegen die Umgebung durch axial dichtende Dichtmittel (16) abgedichtet sind.

6. Modul nach Anspruch 5, **dadurch gekennzeichnet, dass** die Dichtmittel (16) der Flanschverbindung (10) an dem modulseitigen Flansch (10.1) angebracht sind.

7. Modul nach Anspruch 6, **dadurch gekennzeichnet, dass** die Dichtmittel (16) durch eine einzige, einstückige Profildichtung gebildet sind.

8. Modul nach einem der Ansprüche 5 bis 7, **dadurch gekennzeichnet, dass** das oder die Dichtmittel (16) in eine oder mehrere Aufnahmennuten (17) im modulseitigen Flansch (10.1) eingesetzt oder eingeklemmt oder eingeklebt oder einvulkanisiert ist/sind.

9. Modul nach Anspruch 5 oder 6, **dadurch gekennzeichnet, dass** die Flanschverbindung (10) beidseitig ebenflächig ausgeführt ist und dass das Dichtmittel (16) eine einstückige Flachdichtung ist.

10. Modul nach einem der Ansprüche 4 bis 9, **dadurch gekennzeichnet, dass** eine Kurbelgehäuseentlüftung und eine dafür vorgesehene Ölabscheidung und Druckregelung in das Modul (1) einbezogen sind, wobei für die Kurbelgehäuseentlüftung der Ölkanal (11) genutzt wird.

## Claims

1. A module (1) for an internal combustion engine (7), which is embodied as a structural unit consisting of at least one oil filter (2) for the lubricating oil of the internal combustion engine (7) and of an oil cooler (4) for cooling the lubricating oil by means of cooling water of the internal combustion engine (7) and which is flange-mounted as a whole by means of a flange connection (10) to the internal combustion engine (7) by establishing flow connections, wherein, through the flange connection (10), an oil channel (12.1) for oil, which is to be filtered, leads from the internal combustion engine (7) to the oil filter (2), an oil channel (12.2) for filtered oil leads from the oil filter (2) to the internal combustion engine (7), an oil channel (11) for oil, which is to be returned from the oil filter (2) leads to the internal combustion engine (7) in response to a filter insert replacement, a first cooling water channel (14.1) leads from the internal combustion engine (7) to the oil cooler (4) and a second cooling water channel (14.2) leads from the oil cooler (4) to the internal combustion engine (7),
**characterised in**
- **that** the module (1) comprises at least one adjusting mechanism (6), which guides the cooling water to different flow paths of the cooling water cycle,
- **that** provision is made in the module (1) for at least one further cooling water channel (14.6), which is connected to at least one of the cooling water channels (14.1, 14.2) and which leads cooling water to the adjusting mechanism (6) or away from the adjusting mechanism (6),
- **that** two further cooling water channels (14.3, 14.4), which are in flow connection with the adjusting mechanism (6), extend through the flange connection (10),
- **that** the adjusting mechanism (6) comprises an adjustable vane (62), which divides the cooling water on the side of the internal combustion engine (7) as a function of the respective cooling need from the cylinder head thereof and from the crankcase (71) thereof to a cooling water flow path, which mainly cools the cylinder head, and to a cooling water flow path, which mainly cools the crankcase (71), and
- **that**, at the same time, the oil channel (11) serves to return oil from the oil cooler (4) to the internal combustion engine (7) in response to an oil change.

2. The module according to claim 1, **characterised in that** the adjusting mechanism (6) comprises a thermostatic valve (61), which guides the cooling water, as a function of the temperature of the latter, into a small cooling cycle by bypassing a cooler, which cools the cooling water, or into a large cooling cycle by flowing through the cooler, which cools the cooling water.

3. The module according to claim 1 or 2, **characterised in that** provision is made at the module (1) for at least one water connection (15.1, 15.2) for a heater, which can be operated with heated cooling water, in particular a heater for the interior of a vehicle.

4. The module according to any one of claims 1 to 3, **characterised in that** provision is made in the module (1) for a draining channel (21) for the oil filter (2) for draining the oil filter (2) in response to a filter insert replacement, and for an oil discharge channel (41) for the oil cooler (4) for draining the oil cooler (4) in response to an oil change, and that the two channels (21 and 42) converge within the module (1) to the common oil channel (11), which leads through the flange connection (10) to an oil pan (72) of the internal combustion engine (7).

5. The module according to any one of the preceding claims, **characterised in that** the channels (11, 12.1, 12.2, 14.1-14.4), which run through the flange connection (10), are sealed against one another and against the environment by means of sealing means (16), which seal axially.

6. The module according to claim 5, **characterised in that** the sealing means (16) of the flange connection (10) are attached to the flange (10.1) on the module side.

7. The module according to claim 6, **characterised in that** the sealing means (16) are formed by means of a single, one-piece profile seal.

8. The module according to any one of claims 5 to 7, **characterised in that** the sealing means (16) is/are inserted or clamped or adhered or vulcanised into one or a plurality of accommodating grooves (17) in the flange (10.1) on the module side.

9. The module according to claim 5 or 6, **characterised in that** the flange connection (10) is embodied so as to be flat on both sides and that the sealing means (16) is a one-piece flat seal

10. The module according to any one of claims 4 to 9, **characterised in that** a crankcase housing vent and an oil separation and pressure control, which are provided for this purpose, are integrated in the module (1), wherein the oil channel (11) is used for the crankcase housing ventilation.

## Revendications

1. Module (1) destiné à un moteur à combustion interne (7) qui est formé en tant qu'unité intégrée d'au moins un filtre à huile (2) pour l'huile lubrifiante du moteur à combustion interne (7) et d'un refroidisseur d'huile (4) pour le refroidissement de l'huile lubrifiante via de l'eau de refroidissement du moteur à combustion interne (7), et est bridé sur le moteur à combustion interne (7) comme un tout via une fixation à brides (10) par la création de liaisons d'écoulement sur le moteur à combustion interne (7), sachant que du fait de la fixation à brides (10), un canal d'huile (12.1) pour de l'huile à filtrer conduit du moteur à combustion interne (7) au filtre à huile (2), un canal d'huile (12.2) pour l'huile filtrée conduit du filtre à huile (2) au moteur à combustion interne (7), un canal d'huile (11) pour de l'huile de retour conduit du filtre à huile (2) au moteur à combustion interne (7) en cas de changement de cartouche de filtre, un premier canal d'eau de refroidissement (14.1) conduit du moteur à combustion interne (7) au refroidisseur d'huile (4) et un deuxième canal d'eau de refroidissement (14.2) conduit du refroidisseur d'huile (4) au moteur à combustion interne (7), **caractérisé en ce**
- **que** le module (1) comprend au moins un élément de régulation (6) conduisant l'eau de refroidissement sur différents trajets d'écoulement du circuit d'eau de refroidissement,
- **que** dans le module (1), au moins un canal d'eau de refroidissement supplémentaire (14.6) est prévu qui est relié à au moins un des canaux d'eau de refroidissement (14.1, 14.2) et amène l'eau de refroidissement à l'élément de régulation (6) ou l'éloigne de l'élément de régulation (6),
- **que** deux canaux d'eau de refroidissement supplémentaires (14.3, 14.4) en liaison d'écoulement avec l'élément de régulation (6) passent à travers la fixation à brides (10),
- **que** l'élément de régulation (6) comprend un diviseur de courant (62) réglable qui divise l'eau de refroidissement du côté du moteur à combustion interne (7) en fonction du besoin de refroidissement respectif de sa tête de cylindre et de son carter de vilebrequin (71) sur un trajet d'écoulement d'eau de refroidissement refroidissant principalement la tête de cylindre et un trajet d'écoulement d'eau de refroidissement refroidissant principalement le carter de vilebrequin (71), et
- **que** le canal d'huile (11) sert à la fois au retour de l'huile du refroidisseur d'huile (4) vers le moteur à combustion interne (7) en cas de changement d'huile.

2. Module selon la revendication 1, **caractérisé en ce que** l'élément de régulation (6) comprend une vanne à thermostat (61) qui conduit l'eau de refroidissement, en fonction de sa température, dans un petit circuit de refroidissement en contournant un refroidisseur refroidissant l'eau de refroidissement ou dans un grand circuit de refroidissement en traversant le refroidisseur refroidissant l'eau de refroidissement.

3. Module selon la revendication 1 ou 2, **caractérisé en ce qu'**au moins un raccordement d'eau (15.1, 15.2) pour un radiateur pouvant fonctionner avec de l'eau de refroidissement réchauffée, en particulier un radiateur d'habitacle de véhicule automobile, est prévu sur le module (1).

4. Module selon l'une des revendications 1 à 3, **caractérisé en ce que** dans le module (1), un canal de vidange (21) du filtre à huile (2) est prévu pour vidanger le filtre à huile (2) en cas de changement de cartouche de filtre, et qu'un canal d'évacuation d'huile (41) du refroidisseur d'huile (4) est prévu pour vidanger le refroidisseur d'huile (4) en cas de changement d'huile, et que les deux canaux (21 et 22) passent ensemble à l'intérieur du module (1) en direction du canal d'huile (11) commun, qui passe à travers la fixation à brides (10) vers une cuvette à huile (72) du moteur à combustion interne (7).

5. Module selon l'une des revendications précédentes, **caractérisé en ce que** les canaux (11, 12.1, 12.2, 14.1 - 14.4) traversant la fixation à brides (10) sont étanchéifiés les uns contre les autres et contre l'environnement par des moyens d'étanchéité (16) à étanchéité axiale.

6. Module selon la revendication 5, **caractérisé en ce que** les moyens d'étanchéité (16) de la fixation à brides (10) sont posés sur la bride (10.1) côté module.

7. Module selon la revendication 6, **caractérisé en ce que** les moyens d'étanchéité (16) sont formés par un joint profilé unique et d'un seul tenant.

8. Module selon l'une des revendications 5 à 7, **caractérisé en ce que** le ou les moyen(s) d'étanchéité (16) est/sont inséré(s) ou bloqué(s) ou collé(s) ou vulcanisé(s) dans une ou plusieurs rainure(s) de réception (17) dans la bride (10.1) côté module.

9. Module selon la revendication 5 ou 6, **caractérisé en ce que** la fixation à brides (10) est conçue avec une surface plane des deux côtés et que le moyen d'étanchéité (16) est un joint plat d'un seul tenant.

10. Module selon l'une des revendications 4 à 9, **caractérisé en ce qu'**une ventilation du carter de vilebrequin et un séparateur d'huile prévu pour cela et une régulation de la pression sont intégrés dans le module (1), sachant que le canal d'huile (11) est utilisé pour la ventilation du carter de vilebrequin.
